Europäisches Patentamt

European Patent Office

Office européen des brevets

(19)

(11) Veröffentlichungsnummer: **0 003 487**
**B1**

(12) # EUROPÄISCHE PATENTSCHRIFT

(45) Veröffentlichungstag der Patentschrift:
**25.02.81**

(51) Int. Cl.³: **B 21 D 39/20** // B23P11/02

(21) Anmeldenummer: **78200387.5**

(22) Anmeldetag: **21.12.78**

(54) Verfahren und Vorrichtung zum Aufweiten eines als Verbindungsmuffe dienenden Hohlkörpers.

(30) Priorität: **11.01.78 CH 264/78**

(43) Veröffentlichungstag der Anmeldung:
**22.08.79 Patentblatt 79/17**

(45) Bekanntmachung des Hinweises auf die Patenterteilung:
**25.02.81 Patentblatt 81/8**

(84) Benannte Vertragsstaaten:
**BE FR GB IT SE**

(56) Entgegenhaltungen:
**US-A-3 078 905**
**US-A-3 495 301**
**US-A-3 872 573**

(73) Patentinhaber: **BBC Brown, Boveri & Cie.**
**(Aktiengesellschaft), CH-5401 Baden (CH)**

(72) Erfinder: **Künzli, Roland, Weihermattstrasse 8,**
**CH-5507 Mellingen (CH)**
Erfinder: **Melton, Keith, Dr., Sonnenrainstrasse 291,**
**CH-5453 Busslingen (CH)**
Erfinder: **Mercier, Olivier, Dr. Ing., Geissbergstrasse 19,**
**CH-5400 Ennetbaden (CH)**

# Verfahren und Vorrichtung zum Aufweiten eines als Verbindungsmuffe dienenden Hohlkörpers

Die Erfindung betrifft ein Verfahren und eine Vorrichtung zum Aufweiten eines als Verbindungsmuffe dienenden Hohlkörpers aus einer Gedächtnislegierung.

Hohlkörper aus Gedächtnislegierungen können dank ihrer »Formerinnerungs«-Eigenschaften als Verbindungselemente für Halbzeug aller Art wie Drähte, Stangen, Rohre und Profile verwendet werden. Zu diesem Zweck müssen sie im Bereich der Tieftemperaturphase, d. h. im martensitischen Zustand um einen gewissen Bereich, der ein kritisches Maß nicht überschreiten darf, aufgeweitet werden. Die gängigen Verfahren des Weitens sind von den Normen her bekannt (z. B. DIN 8585, Blatt 3). Aus der DE-AS 20 65 651 ist bekannt, daß Schrumpfverbindungen mittels eines Rohres aus einer Gedächtnislegierung hergestellt werden können. In das bei tiefen Temperaturen (beispielsweise < −50° C) aufgeweitete Rohr werden die zu verbindenden Werkstücke axial hineingesteckt, worauf ersteres nach erfolgter Erwärmung (beispielsweise auf Raumtemperatur) schrumpft und sich satt an die Werkstücke anpreßt. Aus der US-PS 38 72 573 ist ferner ein Verfahren und eine Vorrichtung zum Aufweiten von Hülsen aus Gedächtnislegierungen bekannt.

Bei all diesen herkömmlichen Aufweitungsverfahren wird der zu verformende Hohlkörper in irgendeiner Weise an seinem Umfang eingespannt (z. B. mittels Backen) oder stirnseitig an einen Anschlag gepreßt. Da die Eigenschaften der Gedächtnislegierungen sehr empfindlich vom Ausmaß und der Richtung der eingebrachten Gesamtverformung, d. h. von ihrer »Geschichte« abhängen, werden durch ein derartiges Vorgehen zusätzliche unkontrollierbare Spannungen und Deformationen im Werkstück erzeugt, die dessen Funktiontüchtigkeit beeinträchtigen.

Der Erfindung liegt die Aufgabe zugrunde, ein Verfahren sowie eine Vorrichtung anzugeben, wonach ein gleichmäßiges, kontrolliertes Aufweiten von Hohlkörpern aus einer Gedächtnislegierung ohne störende Nebeneffekte ermöglicht wird. Insbesondere soll das Einbringen von die Festigkeit und Betriebssicherheit gefährdenden zusätzlichen Spannungen und Deformationen des Werkstücks strikt vermieden werden.

Erfindungsgemäß wird dies dadurch erreicht, daß der Hohlkörper zunächst auf seiner inneren Begrenzungsfläche an beiden Stirnseiten zwischen zwei koaxiale je einen gegenläufigen Anzug beistzende und gegeneinander in der Längsrichtung verschiebbare Dorne eingespannt, hierauf durch eine Relativbewegung der Dorne gegeneinander zuerst an seinen Stirnseiten sukzessive aufgeweitet und schließlich durch vollständiges Hindurchtreiben des einen der nun parallel bewegten Dorne in seine endgültige Form übergeführt wird, wobei sich der Hohlkörper an einem Ende stirnseitig auf einen Anschlag abstützt, und daß der auf diese Weise aufgeweitete Hohlkörper in ein zur Abkühlung dienendes Tieftemperatur-Kühlmittel abgestoßen wird.

Erfindungsgemäß besteht die Vorrichtung zur Durchführung des Verfahrens aus einem ein Tieftemperatur-Kühlmittel enthaltenden Gefäß einem der Zentrierung dienenden Arbeitstisch mit einem Anschlag für den Hohlkörper und einer Zugvorrichtung in Form einer Ziehbank oder Presse, die durch zwei koaxial zueinander angeordnete, in ihrer Längsrichtung gegeneinander verschiebbare, je an einem ihrer Enden mit einem Anzug versehene, das Profil des zu verformenden Hohlkörpers aufweisende Dorne gekennzeichnet ist.

Weitere Einzelheiten des erfindungsgemäßen Verfahrens und der Vorrichtung ergeben sich aus den durch Figuren näher erläuterten Ausführungsbeispielen. Dabei zeigt

Fig. 1 einen schematischen Längsschnitt durch die Vorrichtung sowie die Stellung ihrer Elemente zu Beginn der 1. Verformungsphase,

Fig. 2 einen schematischen Längsschnitt durch die Vorrichtung im Augenblick der Beendigung der 2. Verformungsphase,

Fig. 3 einen schematischen Längsschnitt durch die Vorrichtung kurz vor dem Ende der 3. Verformungsphase.

## Ausführungsbeispiel I

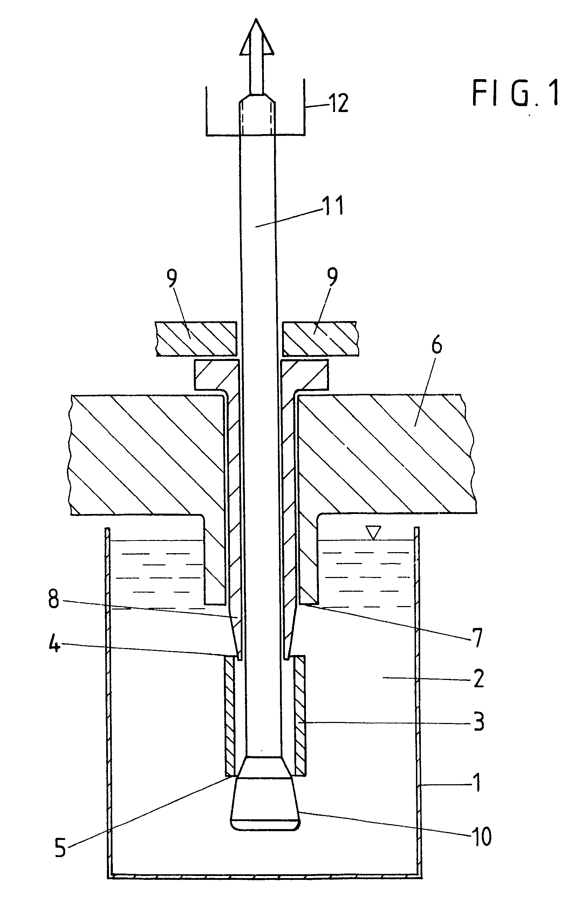

In Fig. 1 ist ein schematischer Längsschnitt durch die Vorrichtung dargestellt. Gleichzeitig entspricht die Stellung der einzelnen Bauelemente der ersten Phase des Verfahrens zu Beginn der Materialverformung.

Ausgehend von einem Gußblock, einem Schmiede- oder Walzbarren wurde nach an sich bekannten Verfahren zunächst ein Rohr hergestellt. Dies kann grundsätzlich durch spanabhebende Bearbeitung, durch Elektroerosion oder durch Strangpressen erfolgen, wobei außer technischen Gesichtspunkten im allgemeinen die Wirtschaftlichkeit der Methode den Ausschlag gibt. Bei der Herstellung des Rohres kann aber auch jedwelche andere herkömmliche Technik Anwendung finden. Im vorliegenden Ausführungsbeispiel I wurde, ausgehend von einem Gußblock ein Rohr mittels Elektroerosion hergestellt. Die verwendete Gedächtnislegierung hatte die folgende Zusammensetzung:

Ti: 45,5 Gew.-%
Ni: 43,0 Gew.-%
Cu: 10,0 Gew.-%
Fe: 1,5 Gew.-%

Vor der Aufweitung betrugen die Abmessungen des zylindrischen Rohres wie folgt:

Außendurchmesser: 26 mm
Innendurchmesser: 20 mm

Wandstärke:    3 mm
Länge:    40 mm

Statt eines zylindrischen Rohres kann selbstverständlich jeder beliebige andere Hohlkörper Verwendung finden, vorausgesetzt daß er glatte Innenflächen besitzt.

Der Hohlkörper 3 wurde in die in Fig. 1 dargestellte Vorrichtung eingespannt. Diese weist ein Gefäß 1 für das Tieftemperatur-Kühlmittel 2 auf, wofür in vorteilhafter Weise flüssiger Stickstoff (−196° C) oder auch tiefgekühlter Alkohol (< −50° C) verwendet werden kann. Das die mechanische Beanspruchungen aufnehmende Fundament der Vorrichtung wird durch den eine Bohrung und einen Anschlag 7 aufweisenden Arbeitstisch 6 gebildet, in welchem der Hohldorn 8 in seiner Längsachse verschiebbar gelagert ist. Letzterer ist zu Beginn der Verformungsphase in seiner Bewegung gehindert und durch die Klemmbacken 9 gegenüber dem Arbeitstisch 6 festgehalten. Der Hohldorn 8 weist an seinem unteren Ende einen schlanken Anzug bzw. — im Falle eines kreisförmigen Hohlkörpers 3 — einen schlanken Konus auf. In seinem Inneren ist die an ihrem unteren Ende in einen Innendorn 10 übergehende Zugstange 11 geführt, welche sich in ihrer Längsrichtung bewegen kann. Diese ist ihrerseits mittels Gewinde oder sonstwie auf herkömmliche Art (Stift, Klemmbacke usw.) an der Zugvorrichtung 12 befestigt, welche einer Ziehbank oder Presse angehört. Die Dorne 8 und 10 bestehen aus kälteunempfindlichen, nicht versprödendem Material, welches bei tiefen Temperaturen noch über eine gute Kerbzähigkeit und hohe mechanische Festigkeit verfügt. Vorteilhafterweise wird dafür nichtrostender Stahl benutzt. Zwecks Verminderung der Reibung während des Verformungsprozessss des Hohlkörpers 3 weisen die Dorne 8 und 10 auf Hochglanz polierte Oberflächen auf.

Der die Form des vorgenannten Rohres aufweisende Hohlkörper 3 wurde zunächst über die Zugstange 11 gestülpt, derart, daß seine untere Stirnseite 5 auf der einen Anzug bzw. Konus bildenden Begrenzungsfläche des Innendorns 10 zum Aufliegen kam. Dabei entsprechen die maximalen Querabmessungen des Innendorns 10 den gewünschten Innenabmessungen des Hohlkörpers 3 unter Berücksichtigung der elastischen Rückfederung des letzteren. Hierauf wurde die Zugstange 11 in die Zugvorrichtung 12 eingeschraubt, nachdem sie durch das Innere des Hohldorns 8 durchgesteckt worden war. Die Zugvorrichtung 12 wurde nun so eingestellt, daß die obere Stirnseite 4 des Hohlkörpers 3 auf der ebenfalls einen Anzug bzw. Konus bildenden Begrenzungsfläche des Hohldorns 8 zum Aufliegen kam. Damit ist die symmetrische Ausgangslage für den Beginn der Verformung des Hohlkörpers 3 erreicht. Es ist insbesondere darauf zu achten, daß der Hohlkörper genau koaxial zur Längsachse der Dorne 8 und 10 sitzt und zwischen diesen fest eingespannt ist. Nach dieser Vorbereitung wurde der gesamte den Hohlkörper 3 und die Dorne 8 und 10 umfassende Teil der Apparatur in das mit einem Tieftemperatur-Kühlmittel 2 gefüllte Gefäß 1 zwecks Abkühlung abgesenkt bzw. das Gefäß 1 gegenüber Werkstück und Werkzeug angehoben. Als Kühlmittel 2 wurde flüssiger Stickstoff (−196° C) verwendet. Dabei wurde der Hohlkörper 3 in seine martensische Phase übergeführt. Durch eine weitere Relativbewegung des Innendorns 10 gegenüber dem Hohldorn 8 unter Ausübung einer entsprechenden Zugkraft auf die Zugstange 11 wurde der zur Aufweitung des Hohlkörpers 3 führende Verformungsprozeß eingeleitet.

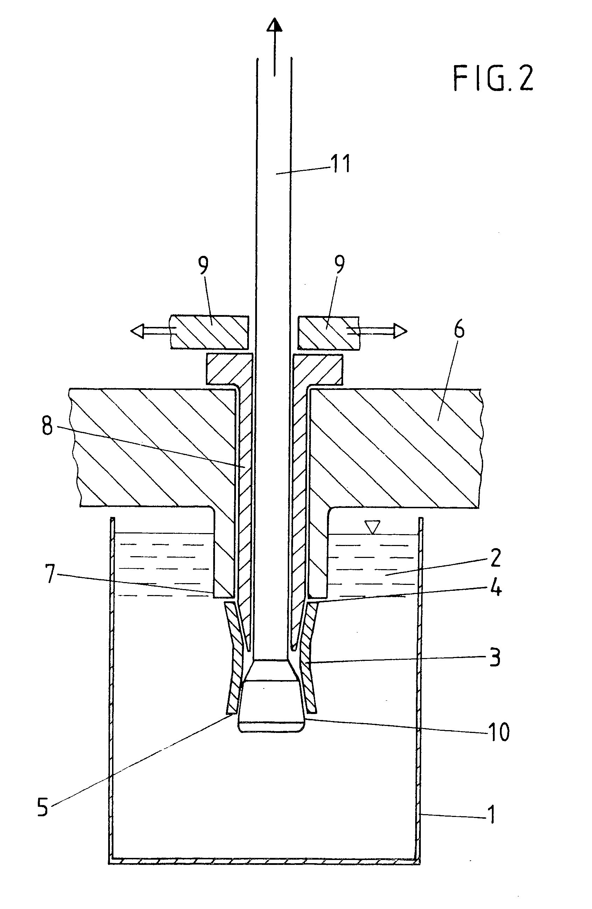

Fig. 2 zeigt einen schematischen Längsschnitt durch die Vorrichtung, welcher die 2. Verformungsphase festhält. Durch Ausübung einer Zugkraft auf die Zugstange, welche im vorliegenden Beispiel 250 kg betrug, wurde der Innendorn 10 gegen den durch die Klemmbacken 9 gegenüber dem Arbeitstisch 6 blockierten Hohldorn 8 bewegt. Da der Anzug bzw. die Konizität des Hohldorns 8 gegenüber den entsprechenden Massen des Innendorns 10 kleiner ist, wurde der der oberen Stirnseite 4 zugewandte Teil des Hohlkörpers 3 zuerst aufgeweitet. Dies ist zu beachten, da der Verformungsprozeß der oberen Stirnseite 4 beendet sein muß bevor letztere am Anschlag 7 zum Aufliegen kommt. Die Aufweitung des der unteren Stirnseite 5 zugewandten Teils hat sich also mit einer gewissen Verzögerung zu vollziehen. In Fig. 2 ist der Augenblick dargestellt, wo die Aufweitung des oberen Endes des Hohlkörpers 3 beendet ist, dessen obere Stirnseite 4 auf dem Anschlag 7 zum Aufliegen kam und der Verformungsprozeß am unteren Ende eingeleitet worden ist. In der Folge wurden nun die Klemmbacken 9, welche den Hohldorn 8 gegen den Arbeitstisch 6 fixierten, seitlich zurückgezogen, so daß sich der Hohldorn 8 frei bewegen kann.

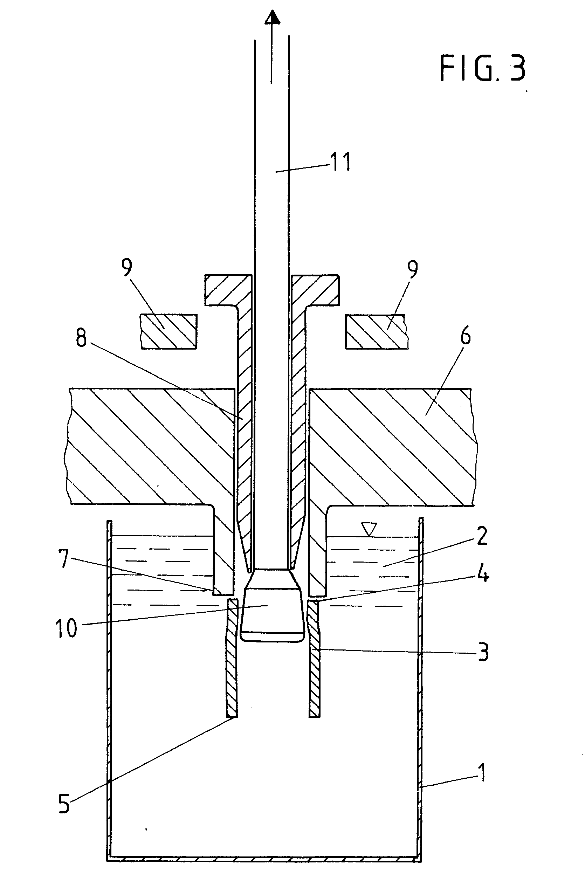

Fig. 3 zeigt einen schematischen Längsschnitt durch die Vorrichtung kurz vor Beendigung der Schlußphase des Verformungsprozesses. Die Klemmbacken 9 wurden seitlich ausgefahren, so daß der Hohldorn sich parallel mit der Zugstange 11 nach oben bewegen kann, wobei er auf der sich erweiternden Begrenzungsfläche des Innendorns 10 aufsitzt. Während der gesamten Schlußphase des Aufweitungsprozesses `stützt sich der Hohlkörper 3 auf dem Anschlag 7 ab, wobei siene obere Stirnseite 4 praktisch keiner weiteren Verformung in Querrichtung unterworfen wird. Dadurch werden zusätzliche Spannungen und Beschädigungen vermieden. Durch die symmetrische Einleitung des Verformungsprozesses sowohl an der oberen Stirnseite 4 wie an der unteren Stirnseite 5 des Hohlkörpers 3 wurde ein über die ganze Länge und den ganzen Querschnitt des Werkstücks gleichmäßiger Spannungszustand erzielt. Nach dem völligen Hindurchziehen des Innendorns 10 durch den Hohlkörper 3 wurde letzterer von selbst auf den Boden des Gefäßes 1 abgestoßen. Damit wurde die Vorrichtung für den nächsten Arbeitszyklus bereitgestellt. Im vorliegenden Beispiel betrug die Aufweitung des als zylindrisches Rohr vorliegenden Hohlkörpers 3 total 3,5% des ursprünglichen Durchmessers, wobei eine Ziehgeschwindigkeit von 4 mm/min eingehalten wurde.

### Ausführungsbeispiel II

Als Ausgangsmaterial wurde eine Gedächtnislegierung folgender Zusammensetzung verwendet:

Ti: 45 Gew.-%
Ni: 43 Gew.-%
Cu: 10 Gew.-%
Fe: 2 Gew.-%

Diese Legierung besitzt eine Temperatur $M_S$ der martensitischen Umwandlung von $-42°$C. Es wurde zunächst ein hohlzylindrischer Gußblock von 6 kg Gewicht, 220 mm Länge, 77 mm Außen- und 19,2 mm Innendurchmesser hergestellt. Aus diesem Rohling wurde durch Strangpressen bei einer Temperatur von 900°C ein zylindrisches Rohr hergestellt, von welchem Hülsen abgestochen wurden. Die Hülsenabmessungen waren wie folgt:

Außendurchmesser: 26,0 mm
Innendurchmesser: 19,6 mm
Wandstärke: 3,2 mm
Länge: 35,0 mm

Eine dieser den Hohlkörper 3 darstellenden Hülsen wurde über die Zugstange 11 geschoben und auf dem Innendorn 10, welcher einen größten Durchmesser von 20,38 mm aufwies, zum Aufliegen gebracht. Hierauf wurde die Zugstange 11 in eine als Zugvorrichtung 12 dienende Ziehbank gemäß Fig. 1 eingeschraubt. Das Ganze wurde in das Alkohol von $-110°$C als Tieftemperatur-Kühlmittel 2 enthaltende Gefäß 1 abgesenkt. Nach einer Einwirkungsdauer von 12 min, während welcher der Hohlkörper 3 und der Innendorn 10 praktisch die Temperatur des tiefgekühlten Alkohols angenommen hatten, wurde der Dorn 10 mit einer Geschwindigkeit von 35 mm/min nach oben gezogen, wobei eine Zugkraft von 350 kg ausgeübt wurde. Der auf diese Weise aufgeweitete Hohlkörper 3 wurde schließlich auf zwei Rohre von 20 mm Außendurchmesser zwecks deren Verbindung aufgeschoben.

### Ausführungsbeispiel III

Aus einer Gedächtnislegierung der Zusammensetzung gemäß Ausführungsbeispiel II wurde ein zylindrischer Rohling von 200 mm Länge und 18 mm Durchmesser gegossen und hierauf bei einer Temperatur von 800°C auf einen Durchmesser von 12 mm heruntergehämmert. Von diesem Stab wurde ein Stück abgeschnitten, im Durchmesser heruntergedreht und durch Elektroerosion mit einem zylindrischen Loch versehen. Der Hohlkörper 3 hatte hierbei folgende Abmessungen:

Außendurchmesser: 10,5 mm
Innendurchmesser: 7,9 mm
Wandstärke: 1,3 mm
Länge: 14,0 mm

Daraufhin wurde ähnlich wie unter Ausführungsbeispiel II beschrieben verfahren. Der Innendorn 10 wies einen größten Durchmesser von 8,24 mm auf, das Kühlmittel 2 war Alkohol von $-120°$C. Die Ziehgeschwindigkeit des Dorns 10 betrug hier 1 mm/min bei einer Zugkraft in der Zugstange 11 von 150 kg.

## Pantenansprüche

1. Verfahren zum Aufweiten eines als Verbindungsmuffe dienenden Hohlkörpers aus einer Gedächtnislegierung, wobei dieser Hohlkörper auf die Verformungstemperatur abgekühlt wird, dadurch gekennzeichnet, daß der Hohlkörper (3) zunächst auf seiner inneren Begrenzungsfläche an beiden Stirnseiten (4, 5) zwischen zwei koaxiale je einen gegenläufigen Anzug besitzende und gegeneinander in der Längsrichtung verschiebbare Dorne (8; 10) eingespannt, hierauf durch eine Relativbewegung der Dorne (8; 10) gegeneinander zuerst an seinen Stirnseiten (4, 5) sukzessive aufgeweitet und schließlich durch vollständiges Hindurchtreiben des einen der nun parallel bewegten Dorne (8; 10) in seine endgültige Form übergeführt wird, wobei sich der Hohlkörper (3) an einem Ende stirnseitig auf einen Anschlag (7) abstützt, und daß der auf diese Weise aufgeweitete Hohlkörper in ein zur Abkühlung dienendes Tieftemperatur-Kühlmittel (2) abgestoßen wird.

2. Verfahren nach Anspruch 1, dadurch gekennzeichnet, daß der Hohlkörper (3) und die Dorne (8; 10) einen dreieckigen, quadratischen, rechteckigen, sechseckigen oder achteckigen Querschnitt aufweisen.

3. Verfahren nach Anspruch 1, dadurch gekennzeichnet, daß der Hohlkörper (3) und die Dorne (8; 10) einen elliptischen oder ovalen Querschnitt aufweisen.

4. Verfahren nach Anspruch 1, dadurch gekennzeichnet, daß der Hohlkörper (3) und die Dorne (8; 10) einen kreisförmigen Querschnitt aufweisen und daß die Dorne (8; 10) an ihrem zur Aufweitung dienenden Ende einfach oder mehrfach abgesetzt konisch ausgebildet sind.

5. Verfahren nach Anspruch 1, dadurch gekennzeichnet, daß einer der Dorne (8) hohl ausgebildet ist und daß in dessen Inneren der andere Dorn (10) koaxial bewegt wird.

6. Vorrichtung zur Durchführung des Verfahrens nach Anspruch 1, bestehend aus einem ein Tieftemperatur-Kühlmittel enthaltenden Gefäß, einem der Zentrierung dienenden Arbeitstisch mit einem Anschlag für den Hohlkörper und einer Zugvorrichtung in Form einer Ziehbank oder Presse, dadurch gekennzeichnet, daß zwei koaxial zueinander angeordnete, in ihrer Längsrichtung gegeneinander verschiebbare, je an einem ihrer Enden mit einem Anzug versehene, das Profil des zu verformenden Hohlkörpers (3) aufweisende Dorne (8; 10) vorgesehen sind.

7. Vorrichtung nach Anspruch 6, dadurch gekennzeichnet, daß einer der Dorne als Hohldorn (8) ausgeführt ist und daß in dessen Inneren eine den als Innendorn (10) ausgeführten anderen Dorn tragende Zugstange (11) geführt ist und daß ferner der Hohldorn (8) einen schlankeren Anzug oder Konus aufweist als der Innendorn (10).

## Claims

1. Process for expanding a hollow body serving as a connecting sleeve, made from a memory alloy, this hollow body being cooled down to the temperature at which deformation is carried out, characterised in that the hollow body (3) is initially clamped, on its inner bounding surface at both ends (4, 5), between two coaxial mandrels (8; 10) which can be pushed towards each other in the longitudinal direction and each having an opposing taper, and in that the hollow body (3) is then progressively expanded by relative movement of the mandrels (8; 10) towards each other, expansion first occurring at its ends (4, 5), and in that the hollow body (3) is finally transformed into its final shape by forcing one of the mandrels (8; 10), which now move together, completely through, the hollow body (3) being meanwhile supported at one end face against a stop (7), and in that the hollow body, thus expanded, is pushed off into a low-temperature coolant (2), which serves as a cooling medium.

2. Process according to Claim 1, characterised in that the hollow body (3) and the mandrels (8; 10) have a triangular, square, rectangular, hexagonal or octagonal cross-section.

3. Process according to Claim 1, characterised in that the hollow body (3) and the mandrels (8; 10) have an elliptical or oval cross-section.

4. Process according to Claim 1, characterised in that the hollow body (3) and the mandrels (8; 10) have a circular cross-section and in that the mandrels (8; 10) are shaped, at their end used for the expanding operation, in the form of a simple cone, or in the form of multiple conical steps.

5. Process according to Claim 1, characterised in that one of the mandrels (8) is designed as a hollow mandrel and in that the other mandrel (10) is moved coaxially inside the first mandrel (8).

6. Device for carrying out the process according to Claim 1, consisting of a vessel containing a low-temperature coolant, a work table used for the centring operation, this work table having a stop for the hollow body, and a drawing fixture in the form of a drawbench or a press, characterised in that two mandrels (8; 10) are provided, arranged coaxially with each other and capable of being pushed towards each other in their longitudinal direction, these mandrels being provided, at one of their ends in each case, with a taper exhibiting the profile of the hollow body (3) to be deformed.

7. Device according to Claim 6, characterised in that one of the mandrels is manufactured as a hollow mandrel (8) and in that a drawing rod (11) is guided inside this mandrel, this drawing rod carrying the other mandrel, which is manufactured as an inner mandrel (10), and in that the hollow mandrel (8) additionally has a slimmer taper or cone than the inner mandrel (10).

## Revendications

1. Procédé en vue d'élargir un corps creux faisant office de manchon d'assemblage et réalisé en un alliage mnémonique, ce corps creux étant refroidi à la température de déformation, caractérisé en ce que le corps creux (3) est serré, tout d'abord sur sa surface de délimitation intérieure et sur ses deux faces frontales (4, 5), entre deux mandrins coaxiaux (8, 10) comportant chacun une dépouille opposée et pouvant se déplacer l'un vers l'autre dans le sens longitudinal après quoi, moyennant un mouvement relatif des mandrins (8, 10) l'un vers l'autre, le corps creux est tout d'abord élargi successivement sur ses faces frontales (4, 5), pour être enfin amené à sa forme définitive par le passage complet d'un des mandrins (8, 10) se déplaçant alors parallèlement, le corps creux (3) prenant appui sur une butée (7) à une de ses extrémités et par sa face frontale, tandis que le corps creux ainsi élargi est repoussé dans un agent réfrigérant (2) à basse température assurant le refroidissement.

2. Procédé suivant la revendication 1, caractérisé en ce que le corps creux (3) et les mandrins (8, 10) ont une section transversale triangulaire, quadratique, rectangulaire, hexagonale ou octogonale.

3. Procédé suivant la revendication 1, caractérisé en ce que le corps creux (3) et les mandrins (8, 10) ont une section transversale elliptique ou ovale.

4. Procédé suivant la revendication 1, caractérisé en ce que le corps creux (3) et les mandrins (8, 10) ont une section transversale circulaire, tandis que, à leur extrémité servant à l'élargissement, les mandrins (8, 10) ont une forme conique à une ou plusieurs dépouilles.

5. Procédé suivant la revendication 1, caractérisé en ce qu'un des mandrins (8) est creux, tandis que l'autre mandrin (10) se déplace coaxialement à l'intérieur de ce mandring (8).

6. Dispositif pour la réalisation du procédé suivant la revendication 1, ce dispositif comportant un récipient contenant un agent réfrigérant à basse température, une table de travail servant au centrage et comportant une butée pour le corps creux, ainsi qu'un dispositif de traction sous forme d'un banc d'étirage ou d'une presse, caractérisé en ce qu'on prévoit deux mandrins (8, 10) disposés coaxialement face à face, pouvant se déplacer l'un vers l'autre dans leur sens longitudinal, comportant chacun une dépouille à une de leurs extrémités et ayant le profil du corps creux à déformer (3).

7. Dispositif suivant la revendication 6, caractérisé en ce qu'un des mandrins est réalisé sous forme d'un mandrin creux (8) à l'intérieur duquel passe un tirant (11) supportant l'autre mandrin faisant office de mandrin intérieur (10), le mandrin creux (8) ayant, en outre, une dépouille ou un cône plus effilé que celui du mandrin intérieur (10).

FIG.1

# FIG.2

11

9  9

6

8

2

7

4

3

10

5

1

FIG. 3